(19) Europäisches Patentamt / European Patent Office / Office européen des brevets

(11) **EP 4 644 859 A1**

(12) **EUROPEAN PATENT APPLICATION**
published in accordance with Art. 153(4) EPC

(43) Date of publication:
05.11.2025  Bulletin 2025/45

(21) Application number: 23910942.4

(22) Date of filing: 29.12.2023

(51) International Patent Classification (IPC):
*G01M 11/02* (2006.01)

(52) Cooperative Patent Classification (CPC):
Y02B 20/40

(86) International application number:
PCT/CN2023/143295

(87) International publication number:
WO 2024/141029 (04.07.2024 Gazette 2024/27)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 29.12.2022  CN 202211714491

(71) Applicants:
• Suzhou Opple Lighting Co., Ltd.
Suzhou, Jiangsu 215211 (CN)
• Opple Lighting Co,. Ltd.
Shanghai 201201 (CN)

(72) Inventors:
• ZHANG, Yong
Suzhou, Jiangsu 215211 (CN)
• LI, Qi
Suzhou, Jiangsu 215211 (CN)
• HUI, Chengqi
Suzhou, Jiangsu 215211 (CN)

(74) Representative: Winter, Brandl - Partnerschaft mbB
Alois-Steinecker-Straße 22
85354 Freising (DE)

(54) **LIGHT SOURCE PARAMETER MEASUREMENT METHOD AND APPARATUS, AND ELECTRONIC DEVICE AND STORAGE MEDIUM**

(57)     A light source parameter measurement method, comprising: according to a tristimulus value acquired by a spectrometer and a signal reading value acquired by a color sensor, acquiring a conversion coefficient between the tristimulus value and the signal reading value; by means of the color sensor, performing measurement on a light source to be subjected to measurement, and acquiring a signal reading value of said light source; acquiring a tristimulus value of said light source according to the signal reading value of said light source, and the conversion coefficient between the tristimulus value and the signal reading value; and acquiring several light source parameters of said light source according to the tristimulus value of said light source. Further provided is a light source parameter measurement apparatus.

Fig. 1

**Description**

CROSS-REFERENCE TO RELATED APPLICATION

This application claims priority to Chinese Patent Application No. 2022117144917 filed on December 29, 2022, entitled "LIGHT SOURCE PARAMETER MEASUREMENT METHOD AND APPARATUS, AND ELECTRONIC DEVICE AND STORAGE MEDIUM", which is incorporated herein by reference in its entirety.

TECHNICAL FIELD

The present disclosure relates to the technical field of light source parameter measurement, and particularly to a light source parameter measurement method and apparatus, an electronic device, and a storage medium.

BACKGROUND

At present, LED lighting has become the mainstream lighting mode. For the emerging fields of intelligent lighting and healthy lighting, intelligent perception of the lighting environment is very important. The perception of the lighting environment is realized through sensors, which make intelligent lighting and healthy lighting more convenient and make people's lives more colorful. Usually, spectrometers and color sensors are used to measure light source parameters. Although the spectrometer can accurately measure the light source parameters of the light source, it is expensive, with complex measurement principles, causing inconvenience to the measurement process; furthermore, the bulky size of the spectrometer makes it not suitable for large-scale applications in intelligent lighting. Color sensors with limited channels and narrow-band responses exhibit inaccuracies in measuring color metric parameters, failing to meet user's requirements.

SUMMARY

The present disclosure provides a light source parameter measurement method and apparatus, an electronic device and a storage medium, to solve the problems that traditional use of spectrometers for detecting light source parameters is expensive and not suitable for large-scale applications in intelligent lighting, and the defects that traditional use of color sensors for detecting light source parameters is inaccurate in color metric parameters and cannot meet user's requirements.

In order to solve the above technical problems, the technical solution of the present disclosure provides a light source parameter measurement method, including:

acquiring a tristimulus-signal reading conversion coefficient according to tristimulus values acquired by a spectrometer and signal readings acquired by a color sensor;
detecting a to-be-measured light source by using the color sensor, to obtain a signal reading of the to-be-measured light source;
acquiring a tristimulus value of the to-be-measured light source according to the signal reading of the to-be-measured light source and the tristimulus-signal reading conversion coefficient; and
acquiring a plurality of light source parameters of the to-be-measured light source according to the tristimulus value of the to-be-measured light source.

Optionally, the acquiring a tristimulus-signal reading conversion coefficient according to tristimulus values acquired by a spectrometer and signal readings acquired by a color sensor includes:

measuring spectra of a plurality of basic light sources by using the spectrometer and the color sensor, to obtain a plurality of standard tristimulus values and signal readings corresponding to a plurality of channels of the color sensor, any two of the plurality of basic light sources having different spectra; and
acquiring the tristimulus-signal reading conversion coefficient according to the plurality of standard tristimulus values and the signal readings corresponding to the plurality of channels.

Optionally, the plurality of standard tristimulus values $\begin{pmatrix} Xn \\ Yn \\ Zn \end{pmatrix}$ form a matrix N, the signal readings Tni corresponding to the plurality of channels form a matrix M, the tristimulus-signal reading conversion coefficient is $K_{sensor}$,

and acquiring a tristimulus-signal reading conversion coefficient matrix $[K_{sensor}]$ according to the plurality of standard tristimulus values and the signal readings corresponding to the plurality of channels, including:

$$[K_{sensor}] = (M'M)^{-1}(M'N),$$

where

$$M = \begin{pmatrix} T11 & T12 & T13 & ... & T1i \\ T21 & T22 & T23 & ... & T2i \\ T31 & T32 & T33 & ... & T3i \\ ... & ... & ... & ... & ... \\ Tn1 & Tn2 & Tn3 & ... & Tni \end{pmatrix}, \quad N = \begin{pmatrix} X1 & Y1 & Z1 \\ X2 & Y2 & Z2 \\ X3 & Y3 & Z3 \\ ... & ... & ... \\ Xn & Yn & Zn \end{pmatrix}.$$

Optionally, acquiring the tristimulus value $\begin{pmatrix} X \\ Y \\ Z \end{pmatrix}$ of the to-be-measured light source according to the signal reading Ti of the to-be-measured light source and the tristimulus-signal reading conversion coefficient $K_{sensor}$, including:

$$\begin{pmatrix} X \\ Y \\ Z \end{pmatrix} = [K_{sensor}] \times (T1 \quad T2 \quad T3 \quad ... \quad Ti).$$

Optionally, a number of the plurality of basic light sources is greater than or equal to a number of the plurality of channels of the color sensor.

Optionally, the plurality of light source parameters comprise at least one selected from the group consisted of illuminance, chromaticity coordinates, correlated color temperature (CCT), color rendering index (CRI), and a ratio of circadian stimulus (CS) to equivalent melanopic lux (EML).

Optionally, a method of acquiring the color rendering index includes:

training based on training data to construct a characterization model of color rendering index for narrow-band spectra, the training data comprising the signal reading acquired by each channel of the color sensor and a color rendering index value corresponding to each signal reading; and
inputting the signal reading of the to-be-measured light source into the characterization model of color rendering index for narrow-band spectra to obtain the color rendering index of the to-be-measured light source.

Optionally, the training based on training data to construct a characterization model of color rendering index for narrow-band spectra includes:

constructing a mapping pair between the signal reading acquired by each channel of the color sensor and the color rendering index value;
inputting the signal reading of the to-be-measured light source into the characterization model of color rendering index for narrow-band spectra, to obtain a predicted color rendering index value;
matching the signal reading of the to-be-measured light source with the constructed mapping pair between the signal reading and the color rendering index value, to obtain a standard color rendering index value;
constructing a loss function according to a difference between the predicted color rendering index value and the standard color rendering index value; and
iteratively solving the loss function by using a coordinate descent method, and completing training the characterization model of color rendering index for narrow-band spectra in response to an iterative convergence condition being satisfied.

Optionally, the iterative convergence condition includes:
the difference between the predicted color rendering index value and the standard color rendering index value is less than a pre-set difference threshold, and/or, a training iteration coefficient reaches a threshold number of iterations.

Optionally, the standard color rendering index value is acquired according to the signal reading of the to-be-measured light source and a model weight coefficient, and the constructing a loss function according to a difference between the predicted color rendering index value and the standard color rendering index value includes:

$$\text{Cost}(w) = \sum_{i=1}^{N}(y_i - w^T x_i)^2 + \lambda\|w\|_1,$$

where Cost(w) is the loss function, $y_i$ is the standard color rendering index value, $x_i$ is the signal reading of the to-be-measured light source, $\lambda$ is a norm adjustment coefficient, w is the model weight coefficient, $\|w\|_1$ is a L1 norm of the model weight coefficient, i is a channel identifier, and N is a total number of channels.

Optionally, a wavelength range of a response curve of the color sensor is evenly distributed in a visible light range of 380 nm to 780 nm.

The technical solution of the present disclosure further provides a light source parameter measurement apparatus, including:

a first acquisition module, configured to acquire a tristimulus-signal reading conversion coefficient according to tristimulus values acquired by a spectrometer and signal readings acquired by a color sensor;

a second acquisition module, configured to detect a to-be-measured light source by using the color sensor, to obtain a signal reading of the to-be-measured light source;

a third acquisition module, configured to acquire a tristimulus value of the to-be-measured light source according to the signal reading of the to-be-measured light source and the tristimulus-signal reading conversion coefficient; and

a fourth acquisition module, configured to acquire a plurality of light source parameters of the to-be-measured light source according to the tristimulus value of the to-be-measured light source.

The technical solution of the present disclosure further provides an electronic device, including a memory, a processor, and a computer program stored on the memory and executable on the processor. When the program is executed by the processor, the steps of any of the light source parameter measurement method described above are implemented.

The technical solution of the present disclosure further provides a non-transitory computer-readable storage medium on which a computer program is stored. When the computer program is executed by a processor, the steps of any of the light source parameter measurement method described above are implemented.

Compared with the existing technology, the technical solution of the present disclosure has the following beneficial effects.

The technical solution of the present disclosure provides a light source parameter measurement method and apparatus, an electronic device and a storage medium, including: acquiring a tristimulus-signal reading conversion coefficient according to tristimulus values acquired by a spectrometer and signal readings acquired by a color sensor; detecting a to-be-measured light source by using the color sensor, to obtain a signal reading of the to-be-measured light source; acquiring a tristimulus value of the to-be-measured light source according to the signal reading of the to-be-measured light source and the tristimulus-signal reading conversion coefficient; and acquiring a plurality of light source parameters of the to-be-measured light source according to the tristimulus value of the to-be-measured light source. Since no spectrometer is used, the measurement cost can be reduced. Moreover, it is suitable for large-scale applications in intelligent lighting. Calculation of the tristimulus value of the to-be-measured light source according to the conversion coefficient can improve the accuracy of color metric parameters and meet user's requirements.

BRIEF DESCRIPTION OF DRAWINGS

In order to explain the technical solutions in the embodiments or the prior art more clearly, the drawings that are necessary for the description of the embodiments or the prior art will be briefly introduced below. Obviously, the drawings in the following description are some of the embodiments, and those of ordinary skill in the art can also obtain other drawings according to these drawings without creative efforts.

Fig. 1 is a first schematic flow chart of a light source parameter measurement method provided by an embodiment of the present disclosure;

Fig. 2 is a second schematic flow chart of a light source parameter measurement method provided by an embodiment of the present disclosure;

Fig. 3 is a third schematic flow chart of a light source parameter measurement method provided by an embodiment of the present disclosure;

Fig. 4 is a first schematic structural diagram of a light source parameter measurement apparatus provided by an embodiment of the present disclosure;

Fig. 5 is a second schematic structural diagram of a light source parameter measurement apparatus provided by an embodiment of the present disclosure; and

Fig. 6 is a schematic structural diagram of an electronic device provided by an embodiment of the present disclosure.

Reference signs in the drawings:

401: first acquisition module; 402: second acquisition module; 403: first calculation module; 404: second calculation module.

DETAILED DESCRIPTION

In order to make the purposes, technical solutions and advantages of the present disclosure clearer, the technical solutions in the present disclosure will be clearly and completely described below in conjunction with the drawings accompanying the embodiments. Obviously, the described embodiments are some of but not all the embodiments of the present disclosure. Based on these embodiments, all other embodiments obtained by those of ordinary skill in the art without creative efforts fall within the scope of protection of the present disclosure.

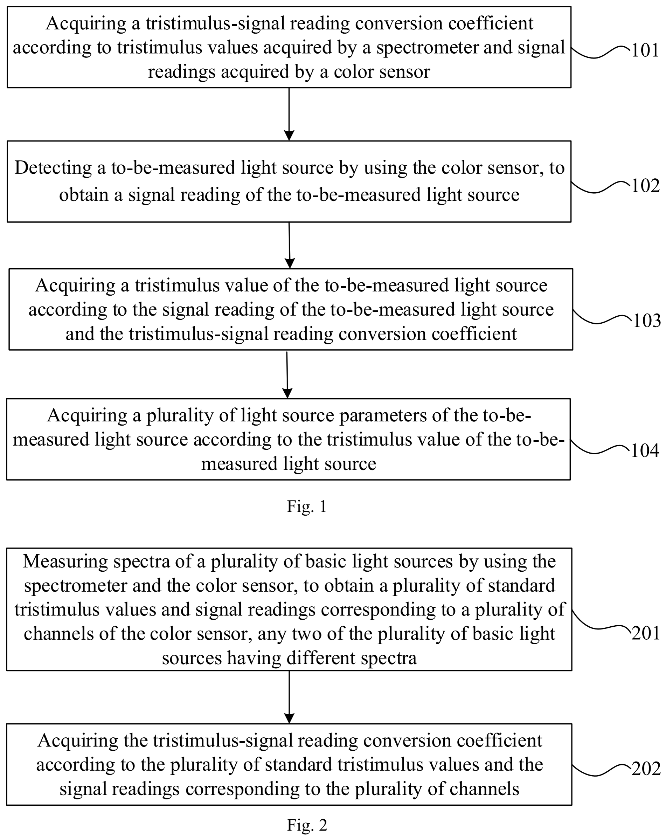

Fig. 1 is a flow chart of a light source parameter measurement method provided by an embodiment of the present disclosure. As shown in Fig. 1, the light source parameter measurement method includes:

Step 101: acquiring a tristimulus-signal reading conversion coefficient according to tristimulus values acquired by a spectrometer and signal readings acquired by a color sensor.

Step 102: detecting a to-be-measured light source by using the color sensor, to obtain a signal reading of the to-be-measured light source.

In this embodiment, the wavelength range of the response curve of the color sensor is evenly distributed in the visible light range of 380 nm to 780 nm.

The number of the channels of the color sensor is, for example, 11. A total of 8 channels are provided in the wavelength range of 380 nm to 780 nm of visible light.

Step 103: acquiring a tristimulus value of the to-be-measured light source according to the signal reading of the to-be-measured light source and the tristimulus-signal reading conversion coefficient.

Step 104: acquiring a plurality of light source parameters of the to-be-measured light source according to the tristimulus value of the to-be-measured light source.

Usually, spectrometers and color sensors are used to measure light source parameters. Although the spectrometer can accurately measure the light source parameters of the light source, the spectrometer is expensive, with complex measurement principles, causing inconvenience to the measurement process; furthermore, the bulky size of the spectrometer makes it not suitable for large-scale applications in intelligent lighting. Color sensors with limited channels and narrow-band responses exhibit inaccuracies in measuring color metric parameters, failing to meet user's requirements.

This embodiment provides a light source parameter measurement method, including: acquiring a tristimulus-signal reading conversion coefficient according to tristimulus values acquired by a spectrometer and signal readings acquired by a color sensor; detecting a to-be-measured light source by using the color sensor, to obtain a signal reading of the to-be-measured light source; acquiring a tristimulus value of the to-be-measured light source according to the signal reading of the to-be-measured light source and the tristimulus-signal reading conversion coefficient; and acquiring a plurality of light source parameters of the to-be-measured light source according to the tristimulus value of the to-be-measured light source. Since no spectrometer is used, the measurement cost can be reduced. Moreover, it is suitable for large-scale applications in intelligent lighting. Calculation of the tristimulus value of the to-be-measured light source according to the conversion coefficient can improve the accuracy of color metric parameters and meet user's requirements.

Based on any of the above embodiments, as shown in Fig. 2, the acquiring a tristimulus-signal reading conversion coefficient according to tristimulus values acquired by a spectrometer and signal readings acquired by a color sensor includes:

Step 201: measuring spectra of a plurality of basic light sources by using the spectrometer and the color sensor, to obtain a plurality of standard tristimulus values and signal readings corresponding to a plurality of channels of the color sensor, any two of the plurality of basic light sources having different spectra.

In this embodiment, the number of the light sources with different spectra is greater than or equal to the number of the channels of the color sensor.

For example, light sources with different spectra are LED lamps with different spectra and different color temperatures. The lamp and the device with color sensor are simultaneously placed in an integrating sphere. The LED panel is placed in the center of the integrating sphere, and the device is placed in the inner section of the integrating sphere, with the main photosensitive direction of the sensor directly facing towards the center of the integrating sphere. After LED panels with different color temperatures are illuminated and stabilized, the spectrum of the same LED panel is measured with a spectrometer and a sensor to obtain a tristimulus value {Xn, Yn, Zn} and a sensor reading {Tn1, Tn2, Tn3... Tni}, where n represents the n-th lamp and i represents the number of the sensor channels.

Step 202: acquiring the tristimulus-signal reading conversion coefficient according to the plurality of standard tristimulus values and the signal readings corresponding to the plurality of channels.

In an embodiment of the present disclosure, the plurality of standard tristimulus values $\begin{pmatrix} Xn \\ Yn \\ Zn \end{pmatrix}$ form a matrix N, the signal readings Tni corresponding to the plurality of channels form a matrix M, the tristimulus-signal reading conversion coefficient is $K_{sensor}$, and acquiring a tristimulus-signal reading conversion coefficient matrix $[K_{sensor}]$ according to the plurality of standard tristimulus values and the signal readings corresponding to the plurality of channels, including:

$$[K_{sensor}] = (M'M)^{-1}(M'N),$$

where

$$M = \begin{pmatrix} T11 & T12 & T13 & ... & T1i \\ T21 & T22 & T23 & ... & T2i \\ T31 & T32 & T33 & ... & T3i \\ ... & ... & ... & ... & ... \\ Tn1 & Tn2 & Tn3 & ... & Tni \end{pmatrix}, \; N = \begin{pmatrix} X1 & Y1 & Z1 \\ X2 & Y2 & Z2 \\ X3 & Y3 & Z3 \\ ... & ... & ... \\ Xn & Yn & Zn \end{pmatrix}.$$

The to-be-measured light source is measured, and the tristimulus value of the to-be-measured light source is calculated as:

$$\begin{pmatrix} X \\ Y \\ Z \end{pmatrix} = [K_{sensor}] \times (T1 \quad T2 \quad T3 \quad ... \quad Ti).$$

In this embodiment, the plurality of light source parameters include but are not limited to: illuminance; chromaticity coordinates; Correlated Color Temperature (CCT); Color Rendering Index (CRI); and the ratio of Circadian Stimulus (CS) to Equivalent Melanopic Lux (EML), etc.

The formula for calculating the color coordinates (X, Y) of the to-be-measured light source according to the tristimulus value of the to-be-measured light source is:

$$x = X/(X + Y + Z), y = Y/(X + Y + Z).$$

The formula for calculating the corrected color temperature (CCT) of the to-be-measured light source according to the tristimulus value of the to-be-measured light source is:

CCT=437*(x-0.3320)/(0.1858-y)^3+ 3601*(x-0.3320) /(0.1858-y)^2 + 6861*(x-0.3320)/(0.1858-y) + 5517.

The formula for calculating the illumination of the to-be-measured light source according to the tristimulus value of the to-be-measured light source is:
Illuminance = $K_{illuminance} \times$ Y, where $K_{illuminance}$ is a constant obtained by measuring at the same position of a standard light source and then calibrating.

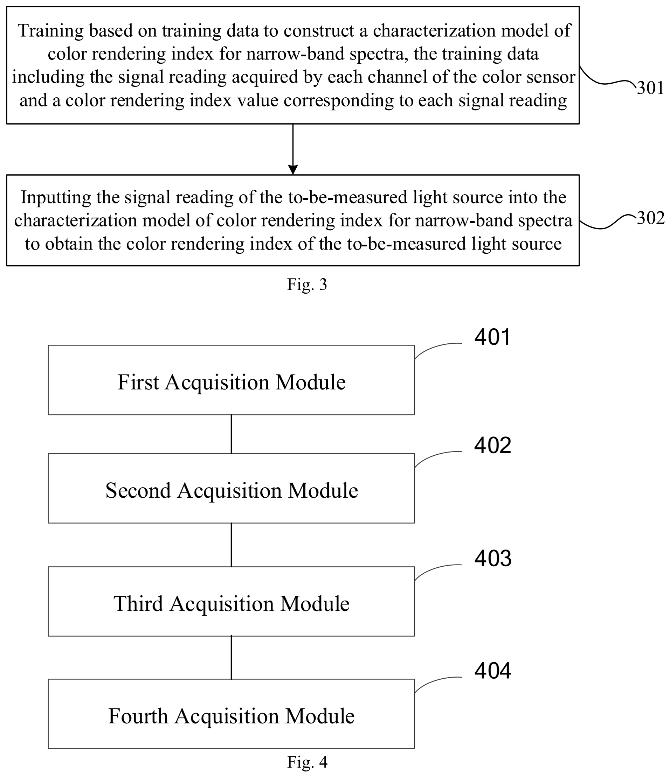

Based on any of the above embodiments, as shown in Fig. 3, the method for acquiring the color rendering index includes:

Step 301: training based on training data to construct a characterization model of color rendering index for narrow-band spectra, the training data including the signal reading acquired by each channel of the color sensor and a color rendering index value corresponding to each signal reading.

Step 302: inputting the signal reading of the to-be-measured light source into the characterization model of color rendering index for narrow-band spectra to obtain the color rendering index of the to-be-measured light source.

In the embodiment of the present disclosure, the training based on training data to construct a characterization model of color rendering index for narrow-band spectra in step 301 includes:

Step 3011: constructing a mapping pair between the signal reading acquired by each channel of the color sensor and the color rendering index value.

Step 3012: inputting the signal reading of the to-be-measured light source into the characterization model of color rendering index for narrow-band spectra, to obtain a predicted color rendering index value.

Step 3013: matching the signal reading of the to-be-measured light source with the constructed mapping pair between the signal reading and the color rendering index value, to obtain a standard color rendering index value.

Step 3014: constructing a loss function according to a difference between the predicted color rendering index value and the standard color rendering index value.

Step 3015: iteratively solving the loss function by using a coordinate descent method, and completing training the characterization model of color rendering index for narrow-band spectra in response to an iterative convergence condition being satisfied.

In this embodiment of the present disclosure, the iterative convergence condition includes:
the difference between the predicted color rendering index value and the standard color rendering index value is less than a pre-set difference threshold, and/or, a training iteration coefficient reaches a threshold number of iterations.

In the embodiment of the present disclosure, the standard color rendering index value is acquired according to the signal reading of the to-be-measured light source and a model weight coefficient, and the constructing a loss function according to a difference between the predicted color rendering index value and the standard color rendering index value includes:

$$\text{Cost}(w) = \sum_{i=1}^{N}(y_i - w^T x_i)^2 + \lambda \|w\|_1,$$

where Cost(w) is the loss function, $y_i$ is the standard color rendering index value, $x_i$ is the signal reading of the to-be-measured light source, $\lambda$ is a norm adjustment coefficient, w is the model weight coefficient, $\|w\|_1$ is a L1 norm of the model weight coefficient, i is a channel identifier, and N is a total number of channels.

The specific steps of the coordinate descent method include:

Step 1: initializing a weight coefficient W, for example, initializing the weight coefficient W to a zero vector.

Step 2: traversing all weight coefficients, sequentially treating one weight coefficient as a variable while fixing the other weight coefficients as constants based on a result of a previous calculation, and solving for an optimal solution under a current condition where there is only one weight coefficient variable.

For the k-th iteration, the method of updating the weight coefficient is as follows, where

$w_m^k$ represents the m-th weight coefficient in the k-th iteration.

$$w_1^k = \underset{w_1}{\text{argmin}}\left(\text{Cost}\left(w_1, w_2^{k-1}, ..., w_{m-1}^{k-1}, w_m^{k-1}\right)\right);$$

$$w_2^k = \underset{w_2}{\text{argmin}}\left(\text{Cost}\left(w_1^k, w_2, ..., w_{m-1}^{k-1}, w_m^{k-1}\right)\right);$$

$$\vdots$$

$$w_m^k = \underset{w_m}{\text{argmin}}\left(\text{Cost}\left(w_1^k, w_2^k, ..., w_{m-1}^k, w_m\right)\right).$$

The acquisition method of other light source parameters such as the ratio (cs/eml) of circadian stimulus (CS) to equivalent melanopic lux (EML) is similar to the acquisition method of the color rendering index. By constructing the corresponding parameter characterization model and its corresponding loss function, the coordinate descent method is used to iteratively solve the loss function to obtain the well-trained parameter characterization model. By inputting the signal readings acquired by the color sensor into the well-trained parameter characterization model, it can obtain the corresponding light source parameters.

The light source parameter measurement method provided in the embodiments mitigates the defect that ordinary XYZ illuminance meters cannot measure complex optical indices, and at the same time mitigates the defect that sensors with narrow-band response (6 to 12 channels) is inaccurate in measuring color metric parameters. The embodiments apply a multi-channel narrow-band color characterization method, which can measure various optical indices relatively accurately.

Embodiments of the present disclosure further provide a light source parameter measurement apparatus described below. The light source parameter measurement apparatus and the light source parameter measurement method in the embodiments of the present disclosure can refer to each other. Therefore, the explanation of relevant terms will not be repeated here.

As shown in Fig. 4, the light source parameter measurement apparatus includes:

a first acquisition module 401, configured to acquire a tristimulus-signal reading conversion coefficient according to tristimulus values acquired by a spectrometer and signal readings acquired by a color sensor;
a second acquisition module 402, configured to detect a to-be-measured light source by using the color sensor, to obtain a signal reading of the to-be-measured light source;
a third acquisition module 403, configured to acquire a tristimulus value of the to-be-measured light source according to the signal reading of the to-be-measured light source and the tristimulus-signal reading conversion coefficient; and
a fourth acquisition module 404, configured to acquire a plurality of light source parameters of the to-be-measured light source according to the tristimulus value of the to-be-measured light source.

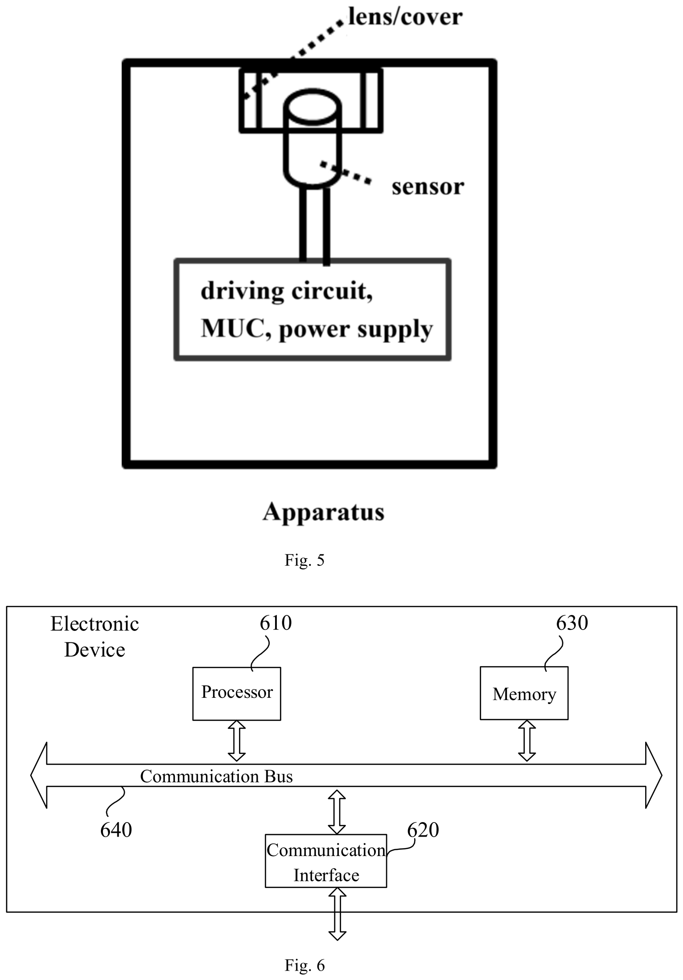

In some embodiments, as shown in Fig. 5, the light source parameter measurement apparatus further includes a color sensor, a lens, a driving circuit, a power supply, etc. The lens is used to perform uniform light processing on the to-be-measured light source. The driving circuit executes control instructions for light source parameter measurement, which are, for example, instructions involved in the first acquisition module, the second acquisition module, the third acquisition module and the fourth acquisition module.

It should be noted that this light source parameter measurement apparatus can be used by lighting engineers, lighting designers and general users to measure color parameters. The light source parameter measurement apparatus can be used alone as a measuring instrument, or integrated into larger lighting systems.

The present disclosure provides a light source parameter measurement apparatus that acquires a tristimulus-signal reading conversion coefficient according to tristimulus values acquired by a spectrometer and signal readings acquired by a color sensor; detects a to-be-measured light source by using the color sensor, to obtain a signal reading of the to-be-measured light source; calculates a tristimulus value of the to-be-measured light source according to the signal reading of the to-be-measured light source and the tristimulus-signal reading conversion coefficient; and calculates a plurality of light source parameters of the to-be-measured light source according to the tristimulus value of the to-be-measured light source. Since no spectrometer is used, the measurement cost can be reduced. Moreover, it is suitable for large-scale applications in intelligent lighting. Calculation of the tristimulus value of the to-be-measured light source according to the conversion coefficient can improve the accuracy of color metric parameters and meet user's requirements.

Fig. 6 illustrates a schematic diagram of the physical structure of an electronic device. As shown in Fig. 6, the electronic device may include: a processor 610, a communication interface 620, a memory 630 and a communication bus 640. The processor 610, the communication interface 620, and the memory 630 communicate with each other through the communication bus 640. The processor 610 can call logic instructions from the memory 630 to perform a light source parameter measurement method, including: acquiring a tristimulus-signal reading conversion coefficient according to tristimulus values acquired by a spectrometer and signal readings acquired by a color sensor; detecting a to-be-measured light source by using the color sensor, to obtain a signal reading of the to-be-measured light source; calculating a tristimulus value of the to-be-measured light source according to the signal reading of the to-be-measured light source and the tristimulus-signal reading conversion coefficient; and calculating a plurality of light source parameters of the to-be-measured light source according to the tristimulus value of the to-be-measured light source.

In addition, the above-mentioned logical instructions in the memory 630 can be implemented in the form of software functional units and can be stored in a computer-readable storage medium when sold or used as an independent product. Based on this understanding, the essence of the technical solution of the embodiment or in other words, the part that contributes to the prior art, or a part of the technical solution can be embodied in the form of a software product. The computer software product is stored in a storage medium, and includes a plurality of instructions which cause a computer device (e.g., it can be a personal computer, a server, or a network device, etc.) to perform all or part of the steps of the methods of various embodiments of the present disclosure. The storage medium above includes U disk, mobile hard disk, read-only memory (ROM), random-access memory (RAM), magnetic disk or optical disk, and other mediums that can store program codes.

On the other hand, embodiments of the present disclosure further provide a non-transitory computer-readable storage medium on which a computer program is stored. When the computer program is executed by a processor, the light source parameter measurement method provided by the above embodiments are implemented, including: acquiring a tristimulus-signal reading conversion coefficient according to tristimulus values acquired by a spectrometer and signal readings acquired by a color sensor; detecting a to-be-measured light source by using the color sensor, to obtain a signal reading of the to-be-measured light source; calculating a tristimulus value of the to-be-measured light source according to the signal reading of the to-be-measured light source and the tristimulus-signal reading conversion coefficient; and calculating a plurality of light source parameters of the to-be-measured light source according to the tristimulus value of the to-be-measured light source.

The apparatus embodiments described above are only illustrative, in which the units described as separate components may or may not be physically separated, and the components shown as units may or may not be physical units, that is, they may be located at the same place, or may also be distributed to multiple network units. Some of or all the modules can be selected according to actual needs to achieve the purpose of the technical solution of the present disclosure. Those of ordinary skill in the art can understand and implement it without creative effort.

Through the above description of the embodiments, those skilled in the art can clearly understand that each embodiment can be implemented by means of software plus the necessary general hardware platform, and of course can also be implemented by hardware. Based on this understanding, the essence of the above technical solution or the part that contributes to the prior art can be embodied in the form of a software product, and the computer software product can be stored in a computer-readable storage medium, such as ROM/RAM, magnetic disk, optical disk and the like, including instructions which cause a computer device (e.g., it may be a personal computer, a server, a network device, etc.) to perform the methods of various embodiments or portions of these embodiments.

Finally, it should be noted that the above embodiments are only used to illustrate but not to limit the technical solutions of the present disclosure. Although the present disclosure has been described in detail with reference to the foregoing embodiments, those of ordinary skill in the art should understand that they can still modify the technical solutions described in the foregoing embodiments, or make equivalent replacements for some of the technical features. However, these modifications or substitutions do not cause the essence of the corresponding technical solutions to deviate from the scope of the technical solutions of various embodiments of the present disclosure.

## Claims

1. A light source parameter measurement method, comprising:

   acquiring a tristimulus-signal reading conversion coefficient according to tristimulus values acquired by a spectrometer and signal readings acquired by a color sensor;
   detecting a to-be-measured light source by using the color sensor, to obtain a signal reading of the to-be-measured light source;
   acquiring a tristimulus value of the to-be-measured light source according to the signal reading of the to-be-measured light source and the tristimulus-signal reading conversion coefficient; and
   acquiring a plurality of light source parameters of the to-be-measured light source according to the tristimulus value of the to-be-measured light source.

2. The light source parameter measurement method according to claim 1, wherein the acquiring a tristimulus-signal reading conversion coefficient according to tristimulus values acquired by a spectrometer and signal readings acquired by a color sensor comprises:

   measuring spectra of a plurality of basic light sources by using the spectrometer and the color sensor, to obtain a plurality of standard tristimulus values and signal readings corresponding to a plurality of channels of the color sensor, any two of the plurality of basic light sources having different spectra; and
   acquiring the tristimulus-signal reading conversion coefficient according to the plurality of standard tristimulus values and the signal readings corresponding to the plurality of channels.

3. The light source parameter measurement method according to claim 2, wherein the plurality of standard tristimulus

values $\begin{pmatrix} Xn \\ Yn \\ Zn \end{pmatrix}$ form a matrix N, the signal readings Tni corresponding to the plurality of channels form a matrix M, the tristimulus-signal reading conversion coefficient is K$_{sensor}$, and

acquiring a tristimulus-signal reading conversion coefficient matrix [K$_{sensor}$] according to the plurality of standard tristimulus values and the signal readings corresponding to the plurality of channels, comprising:

$$[K_{sensor}] = (M'M)^{-1}(M'N),$$

wherein

$$M = \begin{pmatrix} T11 & T12 & T13 & ... & T1i \\ T21 & T22 & T23 & ... & T2i \\ T31 & T32 & T33 & ... & T3i \\ ... & ... & ... & ... & ... \\ Tn1 & Tn2 & Tn3 & ... & Tni \end{pmatrix}, \quad N = \begin{pmatrix} X1 & Y1 & Z1 \\ X2 & Y2 & Z2 \\ X3 & Y3 & Z3 \\ ... & ... & ... \\ Xn & Yn & Zn \end{pmatrix}.$$

4. The light source parameter measurement method according to claim 3, wherein acquiring the tristimulus value $\begin{pmatrix} X \\ Y \\ Z \end{pmatrix}$ of the to-be-measured light source according to the signal reading Ti of the to-be-measured light source and the tristimulus-signal reading conversion coefficient K$_{sensor}$, comprising:

$$\begin{pmatrix} X \\ Y \\ Z \end{pmatrix} = [K_{sensor}] \times (T1 \quad T2 \quad T3 \quad ... \quad Ti).$$

5. The light source parameter measurement method according to claim 2, wherein a number of the plurality of basic light sources is greater than or equal to a number of the plurality of channels of the color sensor.

6. The light source parameter measurement method according to any one of claims 1 to 5, wherein the plurality of light source parameters comprise at least one selected from the group consisted of illuminance, chromaticity coordinates, correlated color temperature (CCT), color rendering index (CRI), and a ratio of circadian stimulus (CS) to equivalent melanopic lux (EML).

7. The light source parameter measurement method according to claim 6, wherein a method of acquiring the color rendering index comprises:

training based on training data to construct a characterization model of color rendering index for narrow-band spectra, the training data comprising the signal reading acquired by each channel of the color sensor and a color rendering index value corresponding to each signal reading; and
inputting the signal reading of the to-be-measured light source into the characterization model of color rendering index for narrow-band spectra to obtain the color rendering index of the to-be-measured light source.

8. The light source parameter measurement method according to claim 7, wherein the training based on training data to construct a characterization model of color rendering index for narrow-band spectra comprises:

constructing a mapping pair between the signal reading acquired by each channel of the color sensor and the color rendering index value;
inputting the signal reading of the to-be-measured light source into the characterization model of color rendering index for narrow-band spectra, to obtain a predicted color rendering index value;
matching the signal reading of the to-be-measured light source with the constructed mapping pair between the signal reading and the color rendering index value, to obtain a standard color rendering index value;
constructing a loss function according to a difference between the predicted color rendering index value and the standard color rendering index value; and

iteratively solving the loss function by using a coordinate descent method, and completing training the characterization model of color rendering index for narrow-band spectra in response to an iterative convergence condition being satisfied.

9. The light source parameter measurement method according to claim 8, wherein the iterative convergence condition comprises:

the difference between the predicted color rendering index value and the standard color rendering index value is less than a pre-set difference threshold, and/or, a training iteration coefficient reaches a threshold number of iterations.

10. The light source parameter measurement method according to claim 8, wherein the standard color rendering index value is acquired according to the signal reading of the to-be-measured light source and a model weight coefficient, and

the constructing a loss function according to a difference between the predicted color rendering index value and the standard color rendering index value comprises:

$$\text{Cost}(w) = \sum_{i=1}^{N}(y_i - w^T x_i)^2 + \lambda \|w\|_1,$$

wherein Cost(w) is the loss function, $y_i$ is the standard color rendering index value, $x_i$ is the signal reading of the to-be-measured light source, $\lambda$ is a norm adjustment coefficient, w is the model weight coefficient, $\|w\|_1$ is a L1 norm of the model weight coefficient, i is a channel identifier, and N is a total number of channels.

11. The light source parameter measurement method according to any one of claims 1 to 5, wherein a wavelength range of a response curve of the color sensor is evenly distributed in a visible light range of 380 nm to 780 nm.

12. A light source parameter measurement apparatus, comprising:

a first acquisition module, configured to acquire a tristimulus-signal reading conversion coefficient according to tristimulus values acquired by a spectrometer and signal readings acquired by a color sensor;
a second acquisition module, configured to detect a to-be-measured light source by using the color sensor, to obtain a signal reading of the to-be-measured light source;
a third acquisition module, configured to acquire a tristimulus value of the to-be-measured light source according to the signal reading of the to-be-measured light source and the tristimulus-signal reading conversion coefficient; and
a fourth acquisition module, configured to acquire a plurality of light source parameters of the to-be-measured light source according to the tristimulus value of the to-be-measured light source.

13. The light source parameter measurement apparatus according to claim 12, wherein the first acquisition module comprises:

a measuring unit, configured to measure spectra of a plurality of basic light sources by using the spectrometer and the color sensor, to obtain a plurality of standard tristimulus values and signal readings corresponding to a plurality of channels of the color sensor, any two of the plurality of basic light sources having different spectra; and
an acquisition unit, configured to acquire the tristimulus-signal reading conversion coefficient according to the plurality of standard tristimulus values and the signal readings corresponding to the plurality of channels.

14. The light source parameter measurement apparatus according to claim 12, wherein the plurality of light source parameters comprise at least one selected from the group consisted of illuminance, chromaticity coordinates, correlated color temperature (CCT), color rendering index (CRI), and a ratio of circadian stimulus (CS) to equivalent melanopic lux (EML).

15. The light source parameter measurement apparatus according to claim 14, wherein the fourth acquisition module comprises a characterization model of color rendering index for narrow-band spectra, and
training data of the characterization model of color rendering index for narrow-band spectra comprises:
the signal reading acquired by each channel of the color sensor and a color rendering index value corresponding to each signal reading.

Acquiring a tristimulus-signal reading conversion coefficient according to tristimulus values acquired by a spectrometer and signal readings acquired by a color sensor 〜101

Detecting a to-be-measured light source by using the color sensor, to obtain a signal reading of the to-be-measured light source 〜102

Acquiring a tristimulus value of the to-be-measured light source according to the signal reading of the to-be-measured light source and the tristimulus-signal reading conversion coefficient 〜103

Acquiring a plurality of light source parameters of the to-be-measured light source according to the tristimulus value of the to-be-measured light source 〜104

Fig. 1

Measuring spectra of a plurality of basic light sources by using the spectrometer and the color sensor, to obtain a plurality of standard tristimulus values and signal readings corresponding to a plurality of channels of the color sensor, any two of the plurality of basic light sources having different spectra 〜201

Acquiring the tristimulus-signal reading conversion coefficient according to the plurality of standard tristimulus values and the signal readings corresponding to the plurality of channels 〜202

Fig. 2

Training based on training data to construct a characterization model of color rendering index for narrow-band spectra, the training data including the signal reading acquired by each channel of the color sensor and a color rendering index value corresponding to each signal reading — 301

Inputting the signal reading of the to-be-measured light source into the characterization model of color rendering index for narrow-band spectra to obtain the color rendering index of the to-be-measured light source — 302

Fig. 3

First Acquisition Module — 401

Second Acquisition Module — 402

Third Acquisition Module — 403

Fourth Acquisition Module — 404

Fig. 4

Apparatus

Fig. 5

Fig. 6

## INTERNATIONAL SEARCH REPORT

| International application No. |
| --- |
| **PCT/CN2023/143295** |

| **A.** | **CLASSIFICATION OF SUBJECT MATTER** |
| --- | --- |

G01M11/02(2006.01)i

According to International Patent Classification (IPC) or to both national classification and IPC

| **B.** | **FIELDS SEARCHED** |
| --- | --- |

Minimum documentation searched (classification system followed by classification symbols)

IPC:G01M.H05B

Documentation searched other than minimum documentation to the extent that such documents are included in the fields searched

CNABS, CNTXT, WPABSC, ENTXTC, DWPI, VEN, ENTXT, CNKI, 万方, WANFANG, 百度学术, BAIDU SCHOLAR, 超星读秀, DUXIU: 三刺激值, 光源, 光谱, 参数, 颜色, 色彩, 色度, 色温, 传感, 照度, 色坐标, 色温, 褪黑素, 昼夜, 刺激, 显色指数, 标准, 参考, 函数, 迭代, 差值, three stimulus value, tristimulus value, light source, colour, color, render+, chroma, illuminance, sensor+, spectra, parameter+, standard, reference, function, iteration, differ+

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 116105977 A (SUZHOU OPPLE LIGHTING CO., LTD. et al.) 12 May 2023 (2023-05-12) claims 1-15 | 1-15 |
| X | CN 109618479 A (OPPLE LIGHTING CO., LTD.) 12 April 2019 (2019-04-12) description, paragraphs 0063-0082 | 1-7, 11-15 |
| A | CN 111122125 A (SHENZHEN RUNLITE TECHNOLOGY CO., LTD.) 08 May 2020 (2020-05-08) entire document | 1-15 |
| A | CN 104703334 A (CHANGZHOU CITY WUJIN DISTRICT INSTITUTE OF TECHNOLOGY FOR SEMICONDUCTOR LIGHTING APPLICATION) 10 June 2015 (2015-06-10) entire document | 1-15 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 April 2024** | **08 April 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/143295**

**C.    DOCUMENTS CONSIDERED TO BE RELEVANT**

| Category* | Citation of document, with indication, where appropriate, of the relevant passages | Relevant to claim No. |
|---|---|---|
| A | CN 114441038 A (ZHEJIANG SCOCIE INSTRUMENT CO., LTD. et al.) 06 May 2022 (2022-05-06)<br>entire document | 1-15 |
| A | CN 109000886 A (GUANGDONG OPPO MOBILE COMMUNICATIONS CO., LTD.) 14 December 2018 (2018-12-14)<br>entire document | 1-15 |
| A | CN 112230236 A (WUHAN FENGHUO KAIZHUO TECHNOLOGY CO., LTD.) 15 January 2021 (2021-01-15)<br>entire document | 1-15 |
| A | US 2005030538 A1 (AVAGO TECHNOLOGIES ECBU IP (SINGAPORE) PTE. LTD.) 10 February 2005 (2005-02-10)<br>entire document | 1-15 |
| A | US 2011204796 A1 (LG INNOTEK CO., LTD.) 25 August 2011 (2011-08-25)<br>entire document | 1-15 |
| A | JP 2011013201 A (SHINDO YOJI) 20 January 2011 (2011-01-20)<br>entire document | 1-15 |
| A | JP H08292735 A (RICOH K. K.) 05 November 1996 (1996-11-05)<br>entire document | 1-15 |

Form PCT/ISA/210 (second sheet) (July 2022)

## INTERNATIONAL SEARCH REPORT
### Information on patent family members

| International application No. |
| --- |
| **PCT/CN2023/143295** |

| Patent document cited in search report | | | Publication date (day/month/year) | Patent family member(s) | | | Publication date (day/month/year) |
| --- | --- | --- | --- | --- | --- | --- | --- |
| CN | 116105977 | A | 12 May 2023 | None | | | |
| CN | 109618479 | A | 12 April 2019 | None | | | |
| CN | 111122125 | A | 08 May 2020 | None | | | |
| CN | 104703334 | A | 10 June 2015 | None | | | |
| CN | 114441038 | A | 06 May 2022 | None | | | |
| CN | 109000886 | A | 14 December 2018 | None | | | |
| CN | 112230236 | A | 15 January 2021 | None | | | |
| US | 2005030538 | A1 | 10 February 2005 | JP | 2006049913 | A | 16 February 2006 |
| | | | | US | 7212287 | B2 | 01 May 2007 |
| | | | | TW | 200606486 | A | 16 February 2006 |
| | | | | TWI | 373647 | B | 01 October 2012 |
| US | 2011204796 | A1 | 25 August 2011 | US | 2015359064 | A1 | 10 December 2015 |
| | | | | US | 9265118 | B2 | 16 February 2016 |
| | | | | JP | 2011222517 | A | 04 November 2011 |
| | | | | JP | 5575047 | B2 | 20 August 2014 |
| | | | | EP | 2672787 | A1 | 11 December 2013 |
| | | | | EP | 2672787 | B1 | 14 February 2018 |
| | | | | US | 2013193869 | A1 | 01 August 2013 |
| | | | | US | 9144136 | B2 | 22 September 2015 |
| | | | | US | 8411025 | B2 | 02 April 2013 |
| | | | | US | 2016157320 | A1 | 02 June 2016 |
| | | | | US | 9480120 | B2 | 25 October 2016 |
| | | | | EP | 2378840 | A1 | 19 October 2011 |
| | | | | EP | 2378840 | B1 | 11 December 2013 |
| JP | 2011013201 | A | 20 January 2011 | None | | | |
| JP | H08292735 | A | 05 November 1996 | JP | 3658435 | B2 | 08 June 2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022117144917